## Europäisches Patentamt
## European Patent Office
## Office européen des brevets

(19)

(11) Veröffentlichungsnummer: **0 070 037**
**B1**

(12) # EUROPÄISCHE PATENTSCHRIFT

(45) Veröffentlichungstag der Patentschrift:
25.01.89

(21) Anmeldenummer: **82106311.2**

(22) Anmeldetag: **14.07.82**

(51) Int. Cl.⁴: **B 01 J 19/00** //
**G21C9/00**

(54) **Verfahren zum Vermeiden oder Hemmen einer Durchmischung der in einem abgeschlossenen Raum vorhandenen Atmosphäre mit einem sich in dem Raum befindenden gasförmigen Stoff.**

(30) Priorität: **14.07.81 DE 3127804**

(43) Veröffentlichungstag der Anmeldung:
**19.01.83 Patentblatt 83/3**

(45) Bekanntmachung des Hinweises auf die Patenterteilung:
**25.01.89 Patentblatt 89/4**

(84) Benannte Vertragsstaaten:
**AT BE CH DE FR GB IT LI LU NL SE**

(56) Entgegenhaltungen:
**EP-A-0 056 830**
**DE-A-2 805 476**
**FR-A-2 364 932**
**US-A-3 437 558**

(73) Patentinhaber: **Jahn, Hermann, Dr., Griegstrasse 13, D-8000 München 40 (DE)**

(72) Erfinder: **Jahn, Hermann, Dr., Griegstrasse 13, D-8000 München 40 (DE)**

(74) Vertreter: **Patentanwälte Grünecker, Kinkeldey, Stockmair & Partner, Maximilianstrasse 58, D-8000 München 22 (DE)**

EP 0 070 037 B1

**Beschreibung**

Die Erfindung betrifft ein Verfahren zum Vermeiden oder Hemmen einer Durchmischung der in einem Sicherheitsbehälter eines Kernreaktors vorhandenen Atmosphäre mit einem sich in dem Sicherheitsbehälter befindenden, gasförmigen Stoff.

Es gibt Kernkraftwerke, die mit Leichtwasserreaktoren ausgerüstet sind. Leichtwasserreaktoren weisen ein Primärkühlmittelsystem auf, bei dem "gewöhnliches" Wasser als Kühlmittel verwendet wird.

Bei Leichtwasserreaktoren wird das Auftreten schwerer Störfälle sicherheitstechnisch dadurch berücksichtigt, daß bei einem Störfall eine automatische Abschaltung des Leichtwasserreaktors vorgenommen und spezielle Hilfsvorrichtungen zugeschaltet werden.

Wenn ein Bruch einer Primärkühlmittelleitung oder zumindest ein Leck auftritt, so wird dieses Vorkommnis als Kühlmittelverluststörfall bezeichnet, der einen schweren Störfall darstellt. Bei Kühlmittelverluststörfällen kann z. B. molekularer Wasserstoff in kurzer Zeit durch Metall-Wasser-Reaktion im Reaktorkernbereich entstehen. Die Explosionsfähigkeit eines Luft-Wasserstoff-Gemisches hängt in hohem Maße von der Konzentration der vorhandenen Reaktionspartner ab. Wenn in einem solchen Fall der Anteil der Luft und des darin vorhandenen Sauerstoffes eine ausreichende Konzentration erreicht, so entsteht wegen des hohen Wasserstoffanteils ein äußerst leicht entzündbares Gasgemisch. Kommt es zu einer Verbrennung bzw. Explosion, so hängt deren Heftigkeit davon ab, ob die mit dem Wasserstoff vermischte Luftmenge, d. h. der enthaltene Sauerstoffanteil, für eine Reaktion mit dem gesamten Wasserstoff ausreicht oder nicht. Wenn in diesem Fall von vorneherein die Durchmischung begrenzt bzw. vermieden wird, daß weitere Luft und damit zusätzlicher Sauerstoff dem Bereich mit hoher Wasserstoffkonzentration zugeführt wird, so kann dadurch die Gefährlichkeit des vorliegenden Unfalls deutlich verringert werden. Ein Zeitgewinn von einigen Stunden spielt hier bereits eine wesentliche Rolle, umsomehr als dann die kurzlebigen Spaltprodukte bereits weitgehend durch natürlichen Zerfall abgebaut sind. Es ist bereits vorgeschlagen worden, den Sicherheitsbehälter eines Kernreaktors während des Betriebes mit einem inerten Gas, wie z. B. Stickstoff zu füllen, und dadurch eine mögliche Entflammung oder Explosion einer mit Luftsauerstoff reagierenden Substanz, wie z. B. Wasserstoff zu verhindern. Dies bringt beim Normalbetrieb erhebliche Nachteile mit sich. Außerdem läßt sich eine Inertisierung der Sicherheitsbehälter nicht bei allen Kernkraftanlagen durchführen.

In der Druckschrift EP-A-0 056 830 wird ein Verfahren zum Vermeiden oder Verringern einer Gefährdung einer Anlage und deren Umgebung durch Reagieren der Stoffgemische beschrieben. Der Grundgedanke bei diesem Verfahren besteht darin, daß eine Trennung der Reaktionspartner angestrebt wird, die rein mechanisch, z. B. durch Schließen von Überströmungsöffnungen zwischen einzelnen Räumen, oder strömungsdynamisch, z. B. durch überführen der Atmosphäre aus dem Sicherheitsbehälter in einen sekundären Behälter erfolgen kann.

In der Druckschrift US-A-3 437 558 sind ein mit flüssigem Natrium gekühlter Kernreaktor und eine Einrichtung beschrieben, die zum Wechsel der Brennstäbe dient. Zum Austausch der Brennstäbe muß eine obere Öffnung in dem Behälter geöffnet werden, der das flüssige Natium und den Reaktorkern enthält. Es soll nun vermieden werden, daß Natriumdampf durch diese Öffnung aus dem Behälter in den oberhalb des Behälters liegenden Raum gelangen kann. Eine Maßnahme hierfür besteht darin, daß ein Gasstrom im Öffnungsbereich erzeugt wird, der im wesentlichen parallel zur Öffnungsfläche verläuft, so daß aufsteigender Natriumdampf von diesem Gasstrom erfaßt und in gezielter Weise transportiert, kondensiert und wieder in den Behälter zurückgeführt werden kann. Eine andere, in dieser Druckschrift angegebenen Möglichkeit besteht darin, daß im Öffnungsbereich eine Kühleinrichtung vorgesehen wird. Aufsteigender Natriumdampf schlägt sich entweder an dieser Kühleinrichtung nieder oder aber kondensiert und tropft in den Behälter zurück. Das Natrium wird also aus dem gasförmigen Aggregatszustand in den flüssigen bzw. festen übergeführt.

Der Erfindung liegt die Aufgabe zugrunde, ein Verfahren zum Vermeiden oder Hemmen einer Durchmischung der in einem Sicherheitsbehälter eines Kernreaktors vorhandenen Atmosphäre mit einem sich in dem Sicherheitsbehälter befindenden gasförmigen Stoff anzugeben.

Dieser Aufgabe wird erfindungsgemäß durch die im Kennzeichen des Anspruches 1 bzw. demjenigen des Anspruches 6 gelöst.

Aufgrund des erfindungsgemäßen Verfahrens ist es möglich, innerhalb des Sicherheitsbehälters eine weitgehend stabile Gasschichtung der Atmosphäre herbeizuführen. Nach dem Grundgedanken der Erfindung werden Dichteunterschiede derart hervorgerufen, daß sich eine Atmosphärenschichtung einstellt. Wenn einmal eine geschichtete Atmosphäre vorliegt, so gleichen sich die Dichteunterschiede zwischen den einzelnen Atmosphärenschichten nur langsam aus, da keine Konvektion vorhanden ist und der Ausgleich lediglich durch Diffusion erfolgt, was ein langsamer Vorgang ist.

Die erfindungsgemäßen Verfahren lassen sich auf äußerst einfache Weise durchführen.

Erfindungsgemäß sind grundsätzlich zwei Möglichkeiten vorgesehen, um eine Dichteänderung herbeizuführen, nämlich entweder mittels Einspeisung von Gas oder aber durch Wärmezufuhr und/oder Wärmeabfuhr.

Statt eines Gases ist es auch möglich, Flüssigkeit einzuspeisen, die innerhalb des Sicherheitsbehälters in den gasförmigen Aggregatszustand übergeht. Die beiden Möglichkeiten können auch gleichzeitig oder zeitlich aufeinanderfolgend durchgeführt werden. Die Wärmezufuhr bzw. Wärmeabfuhr läßt sich auf einfachste Weise durch im oberen Bereich des Sicherheitsbehälters angeordnete Wärmequellen, wie z. B. eine Heizvorrichtung und/oder im Bodenbereich angeordneter Wärmesenken, wie z. B. eine Kühleinrichtung durchführen. Statt solcher Wärmequellen und/oder Wärme senken innerhalb des Sicherheitsbehälters ist es auch im Rahmen der Erfindung möglich, von außen Wärme zuzuführen bzw. abzuführen, nämlich z. B. durch eine Erwärmung mittels Dampf bzw. eine Kühlung mittels Wasser.

Vorteilhafte Weiterbildungen des Erfindungsgegenstandes sind in den Unteransprüchen angegeben.

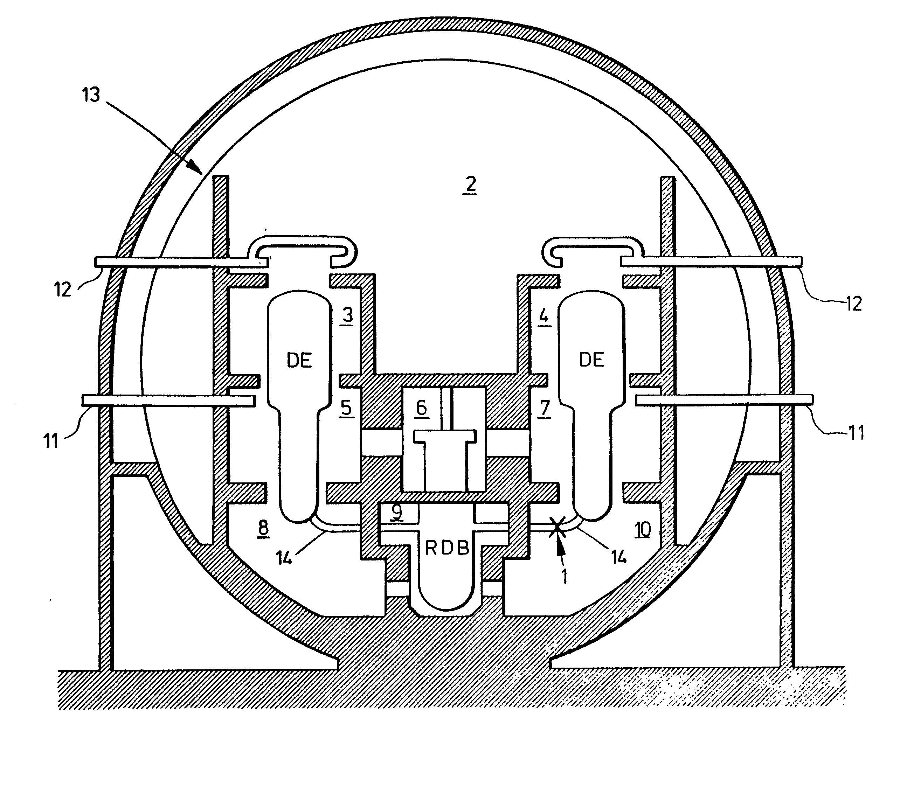

Der Erfindungsgegenstand wird im folgenden anhand der Zeichnung näher erläutert, die eine schematische Schnittdarstellung eines Sicherheitsbehälters eines Kernreaktors vom Druckwasserreaktortyp und wesentliche in dem Sicherheitsbehälter enthaltene Anlagen zeigt.

Das erfindungsgemäße Verfahren wird im Zusammenhang mit einem Kühlmittelverluststörfall in dem Sicherheitsbehälter eines Druckwasserkernreaktors beschrieben.

In der Figur ist mit 13 der Sicherheitsbehälter eines Kernreaktors bezeichnet. Der Innenraum des Sicherheitsbehälters ist durch Trennwände räumlich unterteilt, wodurch untereinander strömungsmäßig verbundene Bereiche, wie die Räume 2 bis 10 gebildet werden. Jeder der Räume steht mit mindestens einem benachbarten Raum durch Überströmöffnungen in Verbindung.

In den Räumen 3, 5, 8 und 4, 7, 10 sind Dampferzeuger DE angeordnet, die über Primärkühlmittelleitungen 14 mit einem Reaktor-Druckbehälter RDB verbunden sind, welcher im Raum 9 angeordnet ist. Mit 1 ist diejenige Stelle bezeichnet, an der ein Bruch in der Primärkühlmittelleitung aufgetreten sein soll.

Es sind sich ins Innere des Sicherheitsbehälters 13 öffnende Gaszuführungsleitungen 11 und 12 vorgesehen. Die Gaszuführleitungen 11 münden in untere Bereiche des Sicherheitsbehälters, nämlich in den Räumen 5 und 7. Die Zuführleitungen 12 führen durch die Kuppel des Sicherheitsbehälters 13 hindurch und münden im oberen Bereich des Sicherheitsbehälters im Raum 2.

Im allgemeinen sind die Gaszuführungsleitungen 11 und 12 innen geschützt durch Betonwände verlegt und an einer Stelle nach außerhalb des Sicherheitsbehälters geführt. Gegebenenfalls kann eine Sammelschiene verwandt werden.

Die Ansteuerung der Leitungen kann, wie es z. B. beim Probenahmemeßsystem der Fall ist, über ferngesteuerte, doppelte Armaturen erfolgen.

Wenn nun ein Kühlmittelstörfall aufgetreten ist, bei dem an der Bruchstelle 1 der Kühlmittelprimärleitung 14 sowohl Kühlmittel als auch Wasserstoff austreten, so wird sich der austretende Wasserstoff im Raum 10 ausbreiten und kann von diesem zunächst in die mit dem Raum 10 verbundenen übrigen Räume 5 -9 gelangen.

Mit Hilfe des erfindungsgemäßen Verfahrens kann die Verteilung des Wasserstoffs im gesamten Behälter vermieden oder zumindest gehemmt werden. Dies geschieht bei dem beschriebenen Ausführungsbeispiel dadurch, daß durch die Gaszuführungsleitungen, welche im oberen Bereich des Sicherheitsbehälters 13 vorgesehen sind, ein Gas mit einer Dichte eingespeist wird, die kleiner als die Dichte der sich im Sicherheitsbehälter 13 befindenden Atmosphäre ist. Es wird angenommen, daß das zugeführte Gas Helium ist. Das durch die Gaszuführungsleitungen 12 zugeführte Helium breitet sich im Kuppelbereich des Sicherheitsbehälters 13 aus und vermischt sich mit der vorhandenen Atmosphäre. Dadurch nimmt die spezifische Dichte der Atmosphäre im oberen Bereich des Sicherheitsbehälters 13 ab und nimmt einen Wert an, der kleiner als derjenige der spezifischen Dichte der Atmosphäre im unteren Bereich des Sicherheitsbehälters 13 ist.

Das durch die z. B. Helium-Einspeisung erzeugte Druckgefälle würde eine Druckausgleichsströmung zwischen dem Volumen des Raumes 2 und den Räumen 3 bis 10, die im allgemeinen als Anlageräume bezeichnet werden, bewirken. Es würde hierbei Helium mit Atmosphäre aus dem Raum 2 in die Räume 3 und 4 unter Druck eingebracht werden, während sich die im Raum 2 befindliche Luft und das übrige Helium durch freie Konvektion vermischen. Dieser Vorgang bewirkt, daß die Räume 2, 3 und 4 eine geringere Dichte aufweisen als die tieferliegenden Räume 5 bis 10 so daß eine stabile Schichtung herbeigeführt wird. Damit wird sich, wenn der Unterschied der spezifischen Dichte der mit Heliumgas gezielt angereicherten Atmosphäre und der spezifischen Dichte der sich in den Räumen 5 bis 10 befindenden Atmosphäre ausreichend groß ist, eine stabile, überlagerte Sperrschicht ausbilden, die eine Durchmischung des Wasserstoffes in den Räumen 5 bis 10 mit dem Sauerstoff des in dem großen Raum 2 enthaltenen Volumens und umgekehrt durch Konvektion verhindert.

Für den aus dem Leck 1 der Primärkühlmittelleitung 14 austretenden Wasserstoff steht zur Reaktion nur der Sauerstoff zur Verfügung, der in der Atmosphäre enthalten ist, welcher sich in den Räumen 5 bis 10 befindet. Unter Störfallbedingungen dürfte der Sauerstoffanteil gerade in diesem Bereich deutlich geringer sein als im Normalbetrieb.

Es wird noch darauf hingewiesen, daß beim Festlegen der zuzuführenden Menge an Heliumgas zu berücksichtigen ist, daß eine von der Zusammensetzung der Atmosphäre abhängige, zu kompensierende Änderung der spezifischen Dichte wegen des ausströmenden Wasserstoffes auch in den Räumen 5 bis 10 auftreten wird. Diese durch den Störfall selbst bedingte Konfiguration kann mittels des erfindungsgemäßen Verfahrens dadurch vorteilhaft beeinflußt werden, daß zusätlich durch die Gaszuführungsleitungen 11 ein schweres, vorzugsweise Inertgas eingespeist und somit die durch den Wasserstoff hervorgerufene Dichteänderung zumindest teilweise ausgeglichen wird.

Es wird darauf hingewiesen, daß, wenn das erfindungsgemäße Verfahren so angewandt wird, bei einer gleichzeitigen Einspeisung durch die Gaszuführungsleitungen 11 und 12 die vorhergehend beschriebenen Überströmvorgänge soweit beeinflußt werden können, daß sich die Druckanstiege im Raum 2 bzw. in den Räumen 5 bis 10 ausgleichen oder ein gesteuertes Überströmen ermöglicht wird.

**Patentansprüche**

1. Verfahren zum Vermeiden oder Hemmen einer Durchmischung der in einem Sicherheitsbehälter eines Kernreaktors vorhandenen Atmosphäre mit einem sich in dem Sicherheitsbehälter befindenden gasförmigen Gefahrenstoff, dadurch gekennzeichnet, daß beim Auftreten von gasförmigen Gefahrenstoffen in der Atmosphäre im unteren Bereich, insbesondere den Räumen (5 - 10), des Sicherheitsbehälters (13) ein weiteres Gas in den Sicherheitsbehälter eingespeist wird, so daß durch das weitere Gas innerhalb des Sicherheitsbehälters (13) eine Schichtenbildung der Atmosphäre hervorgerufen wird, indem das zugeführte weitere Gas eine größere oder eine geringere Dichte als die Atmosphäre im unteren Bereich des Sicherheitsbehälters (13) aufweist.

2. Verfahren nach Anspruch 1, dadurch gekennzeichnet, daß das weitere Gas mit geringerer Dichte als die Atmosphäre im unteren Bereich des Sicherheitsbehälters (13) Helium ist.

3. Verfahren nach Anspruch 1 oder 2, dadurch gekennzeichnet, daß das weitere Gas mit geringerer Dichte als die Atmosphäre im unteren Bereich des Sicherheitsbehälters (13) in den oberen Bereich des Sicherheitsbehälters (13) eingeführt wird.

4. Verfahren nach Anspruch 1, dadurch gekennzeichnet, daß das weitere Gas mit höherer Dichte als die Atmosphäre im unteren Bereich des Sicherheitsbehälsters (13) in den unteren Bereich des Sicherheitsbehälters (13) eingeführt wird.

5. Verfahren nach Anspruch 4, dadurch gekennzeichnet, daß als das weitere Gas ein Inertgas verwendet wird.

6. Verfahren zum Vermeiden oder Hemmen einer Durchmischung der in einem Sicherheitsbehälter eines Kernreaktors vorhandenen Atmosphäre mit einem sich in dem Sicherheitsbehälter befindenden gasförmigen Gefahrenstoff, dadurch gekennzeichnet, daß beim Auftreten von gasförmigen Gefahrenstoffen in der Atmosphäre im unteren Bereich, insbesondere in den Räumen (5 - 10), des Sicherheitsbehälters (13) die Temperatur der Atmosphäre im oberen Bereich des Sicherheitsbehälters (13) durch Zuführen von Wärme erhöht und/oder die Temperatur der Atmosphäre im unteren Bereich des Sicherheitsbehälters (13) durch Abführen von Wärme erniedrigt wird, so dan innerhalb des Sicherheitsbehälters (13) eine Schichtenbildung der Atmosphäre hervorgerufen wird, indem die Atmosphäre im oberen Bereich des Sicherheitsbehälters eine geringere Dichte als die Atmosphäre im unteren Bereich des Sicherheitsbehälters (13) aufweist.

7. Verfahren nach Anspruch 6, dadurch gekennzeichnet, daß zur Temperaturerhöhung ein Gas oder eine Flüssigkeit mit einer höheren Temperatur als die Temperatur der Atmosphäre im oberen Bereich des Sicherheitsbehälters zugeführt wird.

8. Verfahren nach Anspruch 6, dadurch gekennzeichnet, daß zur Temperaturerhöhung mindestens eine im oberen Bereich des Sicherheitsbehälters angeordnete Heizvorrichtung verwendet wird.

9. Verfahren nach Anspruch 6, dadurch gekennzeichnet, daß zur Temperaturerhöhung die Sicherheitsbehälterwand zumindest teilweise erwärmt wird.

10. Verfahren nach Anspruch 6, dadurch gekennzeichnet, dan zur Temperaturerniedrigung in den unteren Bereich des Sicherheitsbehälters (13) ein Gas oder eine Flüssigkeit mit einer niedrigeren Temperatur als die Temperatur der Atmosphäre im unteren Bereich eingeführt wird.

11. Verfahren nach Anspruch 6, dadurch gekennzeichnet, dan zur Temperaturerniedrigung im unteren Bereich des Sicherheitsbehälters (13) der Boden und/oder die Wände zumindest teilweise gekühlt werden.

12. Vorrichtung zur Durchführung des Verfahrens nach Anspruch 1 oder 3, gekennzeichnet durch einen Sicherheitsbehälter eines Kernreaktors mit einer sich in den oberen Bereich des Sicherheitsbehälters (13) öffnenden Rohrleitung (12) die an eine Gaseinspeisevorrichtung anschließbar ist und durch die ein Gas einführbar ist, dessen Dichte niedriger als diejenige der Atmosphäre im unteren Bereich des Sicherheitsbehälters (13) ist.

13. Vorrichtung zur Durchführung des Verfahrens nach einem der Ansprüche 1, 4 oder 5, gekennzeichnet durch einen Sicherheitsbehälter eines Kernreaktors mit einer sich in den unteren Bereich des Sicherheitsbehälters (13) öffnenden Rohrleitung (11) die an eine Gaseinspeisevorrichtung anschließbar ist und durch die ein Gas einführbar ist, dessen Dichte höher als diejenige der Atmosphäre im unteren Bereich des Sicherheitsbehälters (13) ist.

14. Vorrichtung zur Durchführung des Verfahrens nach Anspruch 6, dadurch gekennzeichnet, daß in dem oberen Bereich des Sicherheitsbehälters (13) eine Heizvorrichtung vorgesehen ist, mit der die Temperatur der Atmosphäre in dem Sicherheitsbehälter (13) derart erhöhbar ist, daß eine Schichtenbildung der Atmosphäre in dem Sicherheitsbehälter (13) hervorgerufen wird.

15. Vorrichtung zur Durchführung des Verfahrens nach Anspruch 6, dadurch gekennzeichnet, daß im unteren Bereich des Sicherheitsbehälters (13) Kühlmittel vorgesehen sind, mit denen die Temperatur der Atmosphäre im unteren Bereich derart erniedrigbar ist, daß eine Schichtenbildung der Atmosphäre in dem Sicherheitsbehälter (13) hervorgerufen wird.

**Claims**

1. Process for preventing or impeding mixing of the atmosphere present in a containment of a nuclear reactor and a gaseous dangerous material located in the containment, characterized in that upon the occurrence of gaseous dangerous materials in the atmosphere in the lower region, especially the compartements (5 - 10), of the containment (13), a further gas is fed into the containment, so that a stratifying of the atmosphere inside the containment (13) is caused by the further gas in that the further gas which has been fed in has a higher or a lower density than the atmosphere in the lower region of the containment (13).

2. Process according to Claim 1, characterized in that the further gas having lower density than the atmosphere in the lover region of the containment (15) is helium.

3. Process according to Claim 1 or 2, characterized in that the further gas having lower density than the atmosphere in the lover region of the containment (13) is introduced into the upper region of the containment (13).

4. Process according to Claim 1, characterized in that the further gas having higher density then the atmosphere in the lower region of the containment (13) is introduced into the lower region of the containment (13).

5. Process according to Claim 4, characterized in that an inert gas is employed as the further gas.

6. Process for preventing or impeding mixing of the atmosphere present in a containment of a nuclear reactor with a gaseous dangerous material located in the containment, characterized in that upon the occurrence of gaseous dangerous materials in the atmosphere of the lower region especially the compartments (5 - 10), of the containment (13), the temperature of the atmosphere in the upper region of the containment (13) is increased by the supplying of heat, and/oder the temperature of the atmosphere in the lower region of the containment (13) is reduced by the removal of heat, so that a stratifying of the atmosphere inside the containment (13) is caused in that the atmosphere in the upper region of the containment has a lower density than the atmosphere in the lower region of the containment (13).

7. Process according to Claim 6, characterised in that in order to increase the temperature a gas or a liquid having a higher temperature than the temperature of the atmosphere in the upper region of the containment is supplied.

8. Process according to Claim 6, characterized in that in order to increase the temperature at least one heating device arranged in the upper region of the comtainment is employed.

9. Process according to Claim 6, characterised in that in order to increase the temperature the containment wall is at least partially heated.

10. Process according to Claim 6, characterized in that in order to reduce the temperature there is introduced into the lower region of the containment (13) a gas or a liquid having a lower temperature than the temperature of the atmosphere in the lower region.

11. Process according to Claim 6, characterized in that in order to reduce the temperature in the lower region of the containment (13) the floor and/or the walls at least partially cooled.

12. Apparatus for carring out the process according to Claim 1 or 3, characterized by a containment of a nuclear reactor having a pipeline (12) opening into the upper region of the containment (13) which can be connected to a gas feed device, and through which a gas can be introduced, the density of which is lower than that of the atmosphere in the lower region of the containment (13).

13. Apparatus for carrying out the process according to one of Claims 1, 4 or 5 characterized by a containment of a nuclear reactor having a pipeline (11) opening into the lower region of the containment (13) which can be connected to a gas feed device, and through which a gas can be introduced, the density of which is higher than that of the atmosphere in the lower region of the containment (13).

14. Apparatus for carrying out the process according to Claim 6, characterized in that there is provided in the upper region of the containment (13) a heating device, with which the temperature of the atmosphere in the containment (13) can be increased in such a way that a stratifying of the atmosphere in the containment (13) is caused.

15. Apparatus for carrying out the process according to Claim 6, characterized in that there are provided in the lower region of the containment (13) coolants, with which the temprature of the atmosphere in the lower region can be reduced in such a way that a stratifying of the atmosphere in the containment (13) is caused.

## Revendications

1. Procédé pour empêcher ou inhiber le mélange de l'atmosphère présente dans l'enveloppe de sécurité d'un réacteur nucléaire avec une substance gazeuse dangereuse se trouvant dans l'enveloppe de sécurité, caractérisé en ce que lors de l'introduction de la substance gazeuse dans l'atmosphère, à la partie inférieure, et en particulier dans l'espace (5 - 10) de l'enveloppe de sécurité (13), un gaz supplémentaire est injecté dans l'enveloppe de sécurité de façon à provoquer une stratification de l'atmosphère par l'intermédiaire de ce gaz supplémentaire à l'intérieur de l'enveloppe de sécurité (13), le gaz supplémentaire introduit présentant une épaisseur supérieure ou inférieure à celle de l'atmosphère dans la partie inférieure de l'enveloppe de sécurité (13).

2. Procédé selon la revendication 1, caractérisé en ce que le gaz supplémentaire d'épaisseur inférieure à celle de l'atmosphère dans la partie inférieure de l'enveloppe de sécurité (13) est de, l'hélium.

3. Procédé selon la revendication 1 ou 2, caractérisé en ce que le gaz supplémentaire d'épaisseur inférieure à celle de l'atmosphère de ta partie inférieure de l'enveloppe de sécurité (13), est introduit dans la part te supérieure de l'enveloppe de sécurité (13).

4. Procédé selon la revendication 1, caractérisé en ce que le gaz supplémentaire d'épaisseur supérieure à celle de l'atmosphère de la partie inférieure de l'enveloppe de sécurité (13), est introduit dans la partie inférieure de l'enveloppe de sécurité (13).

5. Procédé selon la revendication 4, caractérisé en ce que le gaz supplémentaire utilisé est un gaz inerte.

6. Procédé pour empêcher ou inhiber un mélange de l'atmosphère présente dans l'enveloppe de sécurité d'un réacteur nucléaire avec une substance gazeuse dangereuse se trouvant dans l'enveloppe de sécurité en ce que lors de l'introduction de substances gazeuses dangereuses dans l'atmosphère de la partie inférieure, et en particulier dans l'espace (5 - 10) de l'enveloppe de sécurité (13), la température de l'atmosphère se trouvant dans la partie supérieure de l'enveloppe de sécurité (13) est augmentée par rapport de chaleur et/ou en ce que la température de l'atmosphère se trouvant dans la partie inférieure de l'enveloppe de sécurité (13) est abaissée par évacuation de chaleur, de façon à ce qu'à l'intérieur de l'enveloppe de sécurité (13), une stratification de l'atmosphère soit provoquée, l'atmosphère de la partie supérieure de l'enveloppe de sécurité présenté présentant une épaisseur plus faible que celle de l'atmosphère se trouvant dans la partie inférieure de l'enveloppe de sécurité (13).

7. Procédé selon la revendication 6, caractérisé en ce qu'un gaz ou en ce qu'un liquide de température supérieure à celle de l'atmosphère de la partie supérieure de l'enveloppe de sécurité, est introduit pour augmenter la température.

8. Procédé selon la revendication 6, caractérisé en ce qu'au moins un dispositif de chauffage disposé dans la partie supérieure de l'enveloppe de sécurité est utilisé pour augmenter la température.

9. Procédé selon la revendication la revendication 6, caractérisé en ce que la paroi de l'enveloppe de sécurité est au moins partiellement chauffé pour augmenter la température.

10. Procédé selon la revendication 6, caractérisé en ce qu'un gaz ou en ce qu'un liquide de température inférieure à celle de l'atmosphère de la partie inférieure, est introduit pour abaisser la température dans la partie inférieure de l'enveloppe de sécurité (13).

11. Procédé selon la revendication 6, caractérisé en ce que le fond et/ou la paroi est au moins partiellement refroidi pour abaisser la température dand la partie inférieure de l'enveloppe de sécurité (13).

12. Dispositif pour mettre en oeuvre le procédé la revendication 1 ou 3, caractérisé par une enveloppe de sécurité d'un réacteur nucléaire munie d'une canalisation (12) s'ouvrant dans la partie supérieure de l'enveloppe de sécurité (13), pouvant être reliée à un dispositif d'injection de gaz et au moyen laquelle on peut introduire un gaz dont l'épaisseur est inférieure à celle de l'atmosphère dans la partie inférieure de l'enveloppe de sécurité (13).

13. Dispositif pour mettre en oeuvre le procédé selon les revendications 1, 4 ou 5, caractérisé par une enveloppe de sécurité d'un réacteur nucléaire muni d'une canalisation (11) s'ouvrant dans la partie inférieure de l'enveloppe de sécurité (13), pouvant être reliée à un dispositif d'injection de gaz au moyen duquel on peut introduire un gaz dont l'épaisseur est supérieure à celle de l'atmosphère dans la partie inférieure de l'enveloppe de sécurité (13).

14. Dispositif pour mettre en oeuvre le procédé selon la revendication 6, caractérisé en ce que dans la partie inférieure de l'enveloppe de sécurité (13), un dispositif de chauffage est prévu pour augmenter la température de la l'atmosphère dans l'enveloppe de sécurité (13) de façon à provoquer la stratification de l'atmosphère dans l'enveloppe de sécurité (13).

15. Dispositif pour mettre en oeuvre le procédé selon la revendication 6, caractérisé en ce que, dans la partie inférieure de l'enveloppe de sécurité (13), un moyen de refroidissement est prévu pour abaisser la température de l'atmosphère dans la partie intérieure de façon à provoquer une stratification de l'atmosphère dans l'enveloppe de sécurité (13).